# EUROPÄISCHE PATENTSCHRIFT

(11) **EP 2 604 406 B1**
(45) Veröffentlichungstag und Bekanntmachung des Hinweises auf die Patenterteilung: **21.05.2014**
(21) Anmeldenummer: 11192987.3
(22) Anmeldetag: 12.12.2011
(51) Int. Cl.: B29C 45/14, B29K 705/00, B29C 47/02

(54) **Verfahren zur Herstellung eines Erzeugnisses**
Method for producing a product
Procédé de fabrication d'un produit

(43) Veröffentlichungstag der Anmeldung: 19.06.2013
(73) Patentinhaber: Weidmann Plastics Technology AG, 8640 Rapperswil (CH)
(72) Erfinder: Harke, Stefan, 8832 Wollerau (CH)
(74) Vertreter: Rutz, Andrea

(56) Entgegenhaltungen:
- WO-A1-2004/000524
- DE-U1-202006 018 515
- US-A1- 2007 132 132

## Beschreibung

Die Erfindung betrifft ein Verfahren zur Herstellung eines Erzeugnisses, das ein flächiges, plastisch umgeformtes Metalldekorelement mit einer Sichtseite und einer Rückseite und eine an die Rückseite angebrachte Schicht aufweist, wobei das flächige, plastisch umgeformte Metalldekorelement eine Vertiefung aufweist, welche zur Sichtseite hin offen ausgebildet ist, wobei in der Vertiefung ein Material angeordnet ist.

Ein Verfahren dieser Art ist im Stand der Technik durch WO2004/000524A1 bekannt geworden. WO2004/000524A1 offenbart ein Verfahren zur Herstellung eines Erzeugnisses mit einer Metallschicht mit einer Vorderseite sowie einer Rückseite, wobei die Rückseite mit einer Kunststoffschicht verbunden ist. Das Erzeugnis wird hergestellt, indem die Vorderseite der Metallschicht partiell mit einem Material in der Form eines Auftrages, wie beispielsweise mit einer Druckfarbe, versehen wird. Dieser Auftrag wird ausgehärtet. Danach wird die Metallschicht mit ausgehärtetem Auftrag mit ihrer Vorderseite in eine Spritzgussform eingelegt. Die Rückseite der Metallschicht wird nun mit Kunststoff hinterspritzt, so dass der ausgehärtete Auftrag die Metallschicht umformt und wenigstens teilweise in die Metallschicht eingeprägt wird. Der eingeprägte Auftrag erlaubt es, die Vorderseite des Erzeugnisses ästhetisch zu gestalten und bildet beispielsweise einen Schriftzug.

Nachteilig bei diesem Verfahren des Standes der Technik ist, dass ein Material in der Form eines Auftrages auf eine plane Vorderseite einer Metallschicht aufgetragen wird. Somit muss beispielsweise die Art des verwendeten Auftragmaterials sowie die Höhe des Auftrages so ausgewählt werden, damit das Auftragmaterial nach dessen Aufbringen auf die Vorderseite der Metallschicht nicht zerläuft und dadurch der eingeprägte Auftrag, wie beispielsweise ein Schriftzug, unscharfe Randkonturen erhält.

Der Erfindung liegt somit die Aufgabe zu Grunde, ein Verfahren der genannten Art zur Verfügung zu stellen, welches eine einfachere und sicherere Herstellung eines solchen Erzeugnisses ermöglicht.

Die Aufgabe ist gemäss Anspruch 1 dadurch gelöst, dass
- in ein flächiges Metalldekorelement die Vertiefung eingearbeitet wird,
- das Material wird als Eintrag in der Vertiefung angeordnet, wobei der Eintrag eine Oberseite mit einem obersten Bereich aufweist,
- die Schicht wird an der Rückseite des flächigen Metalldekorelementes angebracht, wobei durch das Anbringen der Schicht das flächige Metalldekorelement umgeformt wird, so dass der oberste Bereich der Oberseite des Eintrages im Wesentlichen in der Ebene des an die Vertiefung angrenzenden Randbereiches der Sichtseite des flächigen, plastisch umgeformten Metalldekorelementes liegt.

Beim erfindungsgemässen Verfahren wird in das flächige Metalldekorelement mit einer Sichtseite und einer Rückseite, vorzugweise von der Sichtseite her, wenigstens eine Vertiefung eingearbeitet. Die wenigstens eine Vertiefung ist zur Sichtseite hin offen ausgebildet. Danach wird in wenigstens einer der wenigstens einen Vertiefung, bevorzugt von der Sichtseite her, der Eintrag mit einer Oberseite, welche einen obersten Bereich aufweist, angeordnet. Bei mehreren Vertiefungen wird der Eintrag bevorzugt in sämtlichen Vertiefungen eingetragen. Das Merkmal "Eintrag" bezeichnet im Rahmen der Erfindung ein Material, welches in einer bereits vorhandenen Vertiefung angeordnet wird oder angeordnet ist. Danach wird das flächige Metalldekorelement, welches nun wenigstens einen Eintrag mit einer Oberseite mit einem obersten Bereich enthält, umgeformt, indem auf der Rückseite des flächigen Metalldekorelementes wenigstens eine Schicht aufgebracht wird. Durch den Umformprozess entsteht das erfindungsgemässe Erzeugnis umfassend das flächige, plastisch umgeformte Metalldekorelement an dessen Rückseite die wenigstens eine Schicht befestigt ist. Zusätzlich wird durch den Umformprozess wenigstens einer im flächigen Metalldekorelement angeordnete Eintrag mit einer Oberseite mit einem obersten Bereich, bei mehreren Einträgen bevorzugt sämtliche Einträge, räumlich verschoben. Diese räumliche Verschiebung bewirkt, dass der oberste Bereich der Oberseite eines jeweiligen Eintrages im Wesentlichen in die Ebene desjenigen Randbereiches des flächigen, plastisch umgeformten Metalldekorlementes zu liegen kommt, welcher an diejenige Vertiefung grenzt, in welcher der jeweilige Eintrag angeordnet ist.

Die Oberseite des Eintrages ist auf der Sichtseite des erfindungsgemäss hergestellten Erzeugnisses sichtbar und entfaltet eine ästhetische Wirkung. Die Oberseite des Eintrages bildet somit einen Teilbereich der Sichtseite des erfindungsgemässen Erzeugnisses. Durch das Einbringen des Materials in der Form eines Eintrages in eine bereits bestehende Vertiefung, und beispielsweise nicht als Auftrag auf eine plane Oberfläche, ist es möglich, dass das Material des Eintrages beim erfindungsgemässen Verfahren eine vergleichweise geringere Viskosität aufweisen kann, da die Gefahr des Zerlaufens, aufgrund des Einbringens des Materials in eine Vertiefung, verringert ist. Dadurch ermöglicht das erfindungsgemässe Verfahren die Bildung eines Erzeugniseintrages mit gleich scharfen Randkonturen oder vergleichweise schärferen Randkonturen unter Verwendung von Material, welches vergleichweise eine geringere Viskosität aufweist. Das erfindungsgemässe Verfahren erlaubt somit eine grössere Flexibilität bei der Auswahl des Materials für die ästhetische Gestaltung der Sichtseite des Erzeugnisses. Zudem erlaubt das erfindungsgemässe Verfahren eine einfachere Herstellung eines Erzeugnisses, dessen Sichtseite mit einem Element ästhetisch gestaltet ist, wobei die Gefahr der Beschädigung und/oder Verschmutzung des genannten Elementes verringert ist. Dies wird erreicht, indem durch das Aufbringen der Schicht der oberste Bereich der Oberseite des in einer Vertiefung angeordneten Eintrages, unabhängig von seiner Lage relativ zum an dieser Vertiefung angrenzenden Randbereiches der Sichtseite des flächigen Metalldekorelementes, selbsttätig durch die Umformung des flächigen Metalldekorelementes im Wesentlichen in die Ebene des an diese Vertiefung angrenzenden Randbereiches der Sichtseite des flächigen, plastisch umgeformten Metalldekorelementes des Erzeugnisses gebracht wird. Aufgrund der Positionierung des obersten Bereiches im Wesentlichen in der genannten Ebene, ist die Oberseite des Eintrages nicht signifikant oberhalb der Ebene des an die Vertiefung angrenzenden Randbereiches der Sichtseite des flächigen, plastisch umgeformten Metalldekorelementes des Erzeugnisses angeordnet, so dass die Beschädigungswahrscheinlichkeit des Eintrages reduziert ist. Die Oberseite des Eintrages ist ebenfalls nicht signifikant unterhalb der Ebene des an dieser Vertiefung angrenzenden Randbereiches der Sichtseite des flächigen, plastisch umgeformten Metalldekorelementes des Erzeugnisses angeordnet, so dass die Wahrscheinlichkeit der Anordnung von Verschmutzungen auf der Oberseite des Eintrages reduziert ist. Des weiteren erlaubt das erfindungsgemässe Verfahren eine einfachere Herstellung eines Erzeugnisses, dessen Sichtseite mit einem Element ästhetisch gestaltet ist, insbesondere welches mit einem in einer Vertiefung angeordneten Element ästhetisch gestaltet ist, und bei welchem der oberste Bereich der Oberseite des Elementes im Wesentlichen in der Ebene der Sichtseite des Erzeugnisses angeordnet ist. Erfindungsgemäss wird dieser Vorteil erzielt, indem das die Schicht bildende Material unter Druck auf die Rückseite des flächigen Metalldekorelementes aufgebracht wird und der dadurch bewirkten Umformung des flächigen Metalldekorelementes. Durch die genannte Umformung wird der oberste Bereich der Oberseite eines in einer Vertiefung angeordneten Eintrages im flächigen Metalldekorelement, unabhängig davon, ob der oberste Bereich oberhalb oder unterhalb des an die Vertiefung angrenzenden Randbereiches der Sichtseite des flächigen Metalldekorelementes angeordnet ist, im Wesentlichen in die Ebene des an die Vertiefung angrenzenden Randbereiches der Sichtseite des flächigen, plastisch umgeformten Metalldekorelementes des Erzeugnisses gebracht. Das in eine Vertiefung des flächigen Metalldekorelementes eingebrachte Eintragvolumen oder Eintragsmenge kann somit unterschiedlich zum Volumen der jeweiligen Vertiefung sein oder anders formuliert, die Dosierung des Eintragvolumens oder der Eintragsmenge kann unabhängig vom Volumen der jeweiligen Vertiefung im flächigen Metalldekorelement gewählt werden. Weist das flächige Metalldekorelement Vertiefungen unterschiedlicher Volumen auf, können daher gleiche Eintragsmengen oder Eintragsvolumen in die einzelnen Vertiefungen des flächigen Metalldekorelementes eingebracht werden. Bei Vertiefungen gleicher Volumen, können unterschiedliche Eintragsmengen oder Eintragsvolumen in die einzelnen Vertiefungen des flächigen Metalldekorelementes eingebracht werden. Der oberste Bereich der Oberseite eines Eintrages im flächigen Metalldekorelement kann sowohl unterhalb als auch oberhalb des an eine Vertiefung angrenzenden Randbereiches der Sichtseite des flächigen Metalldekorelementes liegen. Zudem müssen die Vertiefungen im flächigen Metalldekorelement nicht geometrisch uniform ausgestaltet sein und/oder dasselbe Volumen aufweisen. Das erfindungsgemässe Verfahren ist somit robust gegenüber Schwankungen der Eintragsmenge oder Eintragsvolumen, Schwankungen des Volumens der einzelnen Vertiefungen oder Toleranzen bei der Fertigung der einzelnen Vertiefungen. Das erfindungsgemässe Verfahren weist zusätzlich den Vorteil auf, dass es die Herstellung eines Erzeugnisses, dessen Sichtseite mit einem Element ästhetisch gestaltet ist, ermöglicht, bei welchem das genannte Element stärker am Erzeugnis befestigt ist. Da der Eintrag erfindungsgemäss in einer bereits vorhandenen Vertiefung des flächigen Metalldekorelementes angeordnet wird, ist eine grössere Flexibilität bei der Auswahl des Eintragmaterials beziehungsweise Elementmaterials möglich. Es können nun Materialien, unabhängiger von deren Viskosität als Eintragmaterial verwendet werden, wie beispielsweise Flüssigkeiten wie zum Beispiel flüssige Lacke, Druckfarben, oder ein Pulver. Es ist nun insbesondere möglich, vergleichsweise niederviskosere Materialien als Eintragmaterial zu verwenden. Bevorzugt werden Flüssigkeiten, bevorzugter an Metall anhaftende Flüssigkeiten verwendet. Flüssigkeiten, insbesondere an Metall anhaftende Flüssigkeiten, schmiegen sich vergleichsweise besser an die Oberfläche der Vertiefung an, so dass eine bessere Befestigung des Eintrages in der Vertiefung, insbesondere eine vergleichsweise bessere Haftung zwischen der Oberfläche des Eintrages und der Oberfläche der Vertiefung im flächigen Metalldekorelement und somit auch im Erzeugnis erzielbar ist. Dem Fachmann sind geeignete Flüssigkeiten oder Pulver bekannt. Beim mittels des erfindungsgemässen Verfahren hergestellten Erzeugnis sind somit auch weniger Zwischenräume zwischen der Oberfläche des Eintrages und der Oberfläche der Vertiefung vorhanden. Dadurch ist auch die Adhäsionskraft zwischen der Oberfläche des Eintrages und der Oberfläche der Vertiefung vergleichsweise erhöht beziehungsweise der Eintrag ist besser an der Oberfläche der Vertiefung befestigt.

Nach einer Weiterbildung der Erfindung wird nach dem Anordnen des Materials als Eintrag in der Vertiefung das flächige Metalldekorelement mit seiner Sichtseite bezüglich der Oberfläche eines Rückhaltemittels, wie beispielsweise einer Wandung, bevorzugt an der Oberfläche des Rückhaltemittels, angeordnet und danach die Schicht an die Rückseite des flächigen Metalldekorelementes angebracht, so dass die Sichtseite des flächigen Metalldekorelementes an die Oberfläche des Rückhaltemittels angepresst und umgeformt wird, so dass der oberste Bereich der Oberseite des Eintrages im Wesentlichen in der Ebene des an die Vertiefung angrenzenden Randbereiches der Sichtseite des flächigen, plastisch umgeformten Metalldekorelementes liegt. Falls das flächige Metalldekorelement einen Eintrag mit einer Oberseite aufweist, dessen oberster Bereich oberhalb der Ebene des an die Vertiefung angrenzenden Randbereiches der Sichtseite des flächigen Metalldekorelementes angeordnet ist, wird auch dieser oberste Bereich an die Oberfläche des Rückhaltemittels angepresst. Die Oberfläche des Rückhaltemittels, wie beispielsweise die Oberfläche einer Wandung, ist beispielsweise plan und weist optional wenigstens einen strukturierten Bereich auf umfassend wenigstens eine Vertiefung und/oder wenigstens eine Erhebung. Durch das Anpressen der Sichtseite des flächigen Metalldekorelementes, und gegebenenfalls des obersten Bereiches eines Eintrages, an die Oberfläche des Rückhaltemittels sowie das Auftragen unter Druck des die Schicht bildenden Materials auf die Rückseite des flächigen Metalldekorelementes, wird das Metalldekorelement umgeformt. Durch die Umformung des flächigen Metalldekorelementes wird ein in einer Vertiefung des flächigen Metalldekorelementes angeordneter Eintrag räumlich verschoben, beispielsweise in Richtung der Sichtseite oder in Richtung der Rückseite des flächigen Metalldekorelementes, so dass der oberste Bereich der Oberseite des Eintrages im Wesentlichen in die Ebene des an die Vertiefung, in welcher der Eintrag angeordnet ist, angrenzenden Randbereiches der Sichtseite des flächigen, plastischen umgeformten Metalldekorelementes des Erzeugnisses gebracht wird.

Die genannte Wandung wird beispielsweise von einer Spritzgussform einer Spritzgussvorrichtung oder von einer Wandung einer Extrusionsvorrichtung gebildet.

Nach einer Weiterbildung der Erfindung werden in das flächige Metalldekorelement wenigstens zwei Vertiefungen eingearbeitet welche zur Sichtseite hin offen ausgebildet sind, wobei in sämtlichen Vertiefungen ein Eintrag angeordnet wird.

Nach einer Weiterbildung der Erfindung ist die in das flächige Metalldekorelement eingearbeitete Vertiefung eine Vertiefung mit Hinterschnitt. Beim flächigen Metalldekorelement und somit auch beim erfindungsgemäss hergestellten Erzeugnis ist somit der in einer Vertiefung mit Hinterschnitt angeordnete Eintrag mechanisch, insbesondere formschlüssig, fixiert. Bevorzugt weist eine Vertiefung mit Hinterschnitt einen Querschnitt auf, dessen Breite mit Abstand zur Sichtseite zunimmt.

Die Vertiefung, welche zur Sichtseite hin offen ausgebildet ist, wird beispielsweise mechanisch hergestellt, indem das flächige Metalldekorelement beispielsweise mechanisch plastisch deformiert wird, zum Beispiel durch einen Prägevorgang mit Hilfe einer dem Fachmann bekannten Presse. Die Vertiefung kann auch mit mehreren in Serie geschalteten Pressen hergestellt werden. Die Vertiefung kann auch hergestellt werden, indem diese mechanisch herausgeschnitten wird. Ebenfalls möglich ist, die Vertiefung, welche zur Sichtseite hin offen ausgebildet ist, mit chemischen Mitteln herzustellen. Hierzu wird beispielsweise die Sichtseite zum Beispiel chemisch geätzt. Hierzu kann zum Beispiel das dem Fachmann bekannte in der Halbleiter- und Mikrosystemtechnik zur Herstellung von integrierten Schaltungen verwendete Verfahren der Photolithographie angewendet werden.

Nach einer Weiterbildung der Erfindung wird die Vertiefung derart hergestellt, dass die Oberfläche der Vertiefung eine Oberflächenrauheit aufweist, welche vergleichsweise höher ist als die Oberflächenrauheit der Sichtseite des flächigen Metalldekorelementes. Dies kann beispielsweise durch Plasmaätzen oder Laserbestrahlung geschehen. Dem Fachmann sind grundsätzlich zur Aufrauung von Oberflächen diverse Verfahren bekannt. Aufgrund der vergleichsweise höheren Rauheit der Oberfläche der Vertiefung ist die Adhäsionskraft der Oberfläche der Vertiefung bezüglich einem Eintrag, insbesondere einem aus wenigstens einer Druckfarbe hergestellten Eintrag, höher. Dem Fachmann sind Verfahren zur Messung der Oberflächenrauheit bekannt.

Nach einer Weiterbildung der Erfindung wird die Vertiefung eingearbeitet, indem durch Wärmeeintrag auf der Sichtseite des flächigen Metalldekorelementes Material des flächigen Metalldekorelementes entfernt wird. Dieser Wärmeeintrag kann beispielsweise mittels Plasmaätzen erfolgen. Nach einer Weiterbildung der Erfindung erfolgt der Wärmeeintrag mittels Laserstrahlung. Mittels Laserstrahlung können vergleichsweise besser definierte Flächenbereiche mit Wärmeenergie beaufschlagt werden sowie Vertiefungen mit definierten Querschnitten hergestellt werden. Wird die Vertiefung mittels Laserstrahlung hergestellt, weist die Metalloberfläche der Vertiefung eine vergleichsweise höhere Oberflächenrauheit als die nicht mit Laserstrahlung behandelte Oberfläche der Sichtseite des flächigen Metalldekorelements auf. Aufgrund der höheren Oberflächenrauheit ist die Adhäsionskraft zwischen der Oberfläche der Vertiefung und der Oberfläche des Eintrages erhöht. Erhöht wird die Adhäsionskraft zwischen der Oberfläche der Vertiefung und der Oberfläche des Eintrages durch die Laserbearbeitung, wenn das flächige Metalldekorelement aus Stahl hergestellt ist. Stark wird die Adhäsionskraft durch die Laserbearbeitung erhöht, falls das flächige Metalldekorelement aus Edelstahl hergestellt ist, besonders stark wird die Adhäsion erhöht, falls das flächige Metalldekorelement aus Edelstahl mit austenitischem Gefüge hergestellt ist. Besonders gut ist die Erhöhung der Adhäsion zwischen der Oberfläche des Eintrages und der mittels Laser hergestellten Oberfläche der Vertiefung, falls der Eintrag aus einer Druckfarbe oder mehreren Druckfarben hergestellt ist. Entsprechend ist auch beim mittels des erfindungsgemässen Verfahren hergestellten Erzeugnis ein Eintrag vergleichsweise besser an der Oberfläche der Vertiefung befestigt.

Nach einer Weiterbildung der Erfindung ist die Tiefe der Vertiefung geringer als die Dicke des flächigen Metalldekorelementes. Im Querschnitt ist eine Vertiefung beispielsweise im Wesentlichen rechteckförmig oder im Wesentlichen trapezförmig. Grundsätzlich sind beliebige Formen der Vertiefung denkbar, solange diese durch den Fachmann herstellbar sind.

Nach einer Weiterbildung der Erfindung weist die im flächigen Metalldekorelement eingearbeitete Vertiefung ein erstes Volumen, und nach der Umformung des flächigen Metalldekorelementes im flächigen, plastisch umgeformten Metalldekorelement, ein zweites Volumen auf, wobei das erste Volumen kleiner als das zweite Volumen ist.

Nach einer Weiterbildung der Erfindung weist die im flächigen Metalldekorelement eingearbeitete Vertiefung ein erstes Volumen, und nach der Umformung des flächigen Metalldekorelementes im flächigen, plastisch umgeformten Metalldekorelement, ein zweites Volumen auf, wobei das erste Volumen grösser als das zweite Volumen ist.

Der Eintrag, welcher in die Vertiefung eingetragen wird, kann ein Festkörper oder eine Flüssigkeit oder ein Pulver sein. Im Falle des Festkörpers kann der Eintrag ein beliebiges Material enthalten, wie beispielsweise Kunststoff, Metall oder Keramik. Im Falle einer Flüssigkeit ist die Flüssigkeit beispielsweise ein flüssiger Lack auf Lösungsmittelbasis oder ein flüssiger Lack auf Wasserbasis oder eine Druckfarbe. Bevorzugt ist der Eintrag eine Flüssigkeit oder ein Pulver. Besonders bevorzugt ist der Eintrag eine Flüssigkeit, insbesondere eine an Metall anhaftende Flüssigkeit, da eine Flüssigkeit vergleichweise besser dosiert sowie einfacher und präziser in eine Vertiefung eingebracht werden kann. Ganz besonders bevorzugt ist ein Eintrag aus einer oder mehreren Druckfarben hergestellt. Vorzugweise bewirkt der Eintrag eine Schutzwirkung bezüglich der Oberfläche der Vertiefung, wie beispielsweise einen Korrosionsschutz. Hierzu weist der Eintrag beispielsweise Korrosionsschutzpigmente auf.

Nach einer nicht beanspruchten Weiterbildung liegt der oberste Bereich der Oberseite des Eintrages oberhalb der Ebene des an die Vertiefung angrenzenden Randbereiches der Sichtseite des flächigen Metalldekorelementes. Nach einer nicht beanspruchten Weiterbildung liegt der oberste Bereich der Oberseite des Eintrages unterhalb der Ebene des an die Vertiefung angrenzenden Randbereiches der Sichtseite des flächigen Metalldekorelementes. Bei einem flächigen Metalldekorelement können selbstverständlich Mischformen der in diesem Abschnitt dargelegten, möglichen Anordnungen des obersten Bereiches der Oberseite des Eintrages bezüglich der Sichtseite des flächigen Metalldekorelementes vorliegen. So liegt beispielsweise in einer ersten Vertiefung des flächigen Metalldekorelementes der oberste Bereich der Oberseite eines ersten Eintrages oberhalb der Ebene des an die den ersten Eintrag enthaltenden ersten Vertiefung angrenzenden Randbereiches der Sichtseite des flächigen Metalldekorelementes und in der zweiten Vertiefung des flächigen Metalldekorelementes ist der oberste Bereich der Oberseite des zweiten Eintrages unterhalb der Ebene des an die den zweiten Eintrag enthaltenden zweiten Vertiefung angrenzenden Randbereiches der Sichtseite des flächigen Metalldekorelementes angeordnet.

Nach einer Weiterbildung der Erfindung ist die Oberseite des Eintrages im flächigen Metalldekorelement wenigstens teilweise plan, bevorzugt im Wesentlichen plan, bevorzugter plan. Nach einer Weiterbildung der Erfindung ist die Oberseite des Eintrages im flächigen Metalldekorelement wenigstens teilweise nach aussen gewölbt, im Wesentlichen nach aussen gewölbt oder nach aussen gewölbt. Nach einer Weiterbildung der Erfindung ist die Oberseite des Eintrages im flächigen Metalldekorelement wenigstens teilweise nach innen gewölbt, im Wesentlichen nach innen gewölbt oder nach innen gewölbt.

Nach einer Weiterbildung der Erfindung entspricht die Geometrie des Eintrages im flächigen Metalldekorelement im Wesentlichen, bevorzugt exakt, der Geometrie des Eintrages im flächigen, plastisch umgeformten Metalldekorelement. Während des Umformvorganges des flächigen Metalldekorelementes wird somit ein Eintrag im Metalldekorelement im Wesentlichen nicht umgeformt, bevorzugt nicht umgeformt. Bei wenigstens zwei Einträgen im flächigen Metalldekorelement werden bevorzugt sämtliche Einträge im Wesentlichen nicht umgeformt, bevorzugt nicht umgeformt.

Nach einer Weiterbildung der Erfindung wird nach dem Anordnen des Eintrages in die Vertiefung der Eintrag verfestigt. Nach einer Weiterbildung der Erfindung wird nach dem Anordnen des Eintrages in die Vertiefung, der Eintrag thermisch, mit UV-Strahlung, chemisch oder durch Ablüften ausgehärtet. Bevorzugt wird erst nach dem Verfestigen beziehungsweise Aushärten die Schicht auf die Rückseite des flächigen Metalldekorelementes aufgebracht.

Nach einer Weiterbildung der Erfindung findet das Aushärten des Eintrages bei 70 bis 220°C, vorzugsweise bei mindestens etwa 80°C statt.

Nach einer Weiterbildung der Erfindung wird der Eintrag mittels Aufdrucken in der Vertiefung des flächigen Metalldekorelementes angeordnet. Das Aufdrucken erfolgt beispielsweise mittels Siebdruck.

Nach einer Weiterbildung der Erfindung ist das flächige Metalldekorelement aus Aluminium, bevorzugt aus Stahl, bevorzugter aus Edelstahl, noch bevorzugter aus austenitischem Edelstahl, hergestellt. Denkbar ist auch, dass das flächige Metalldekorelement beispielsweise aus Kupfer, Messing oder anderen geeigneten Metallen hergestellt ist. Im Rahmen der Erfindung wird unter dem Begriff "Edelstahl" ein Stahl verstanden, welcher mindestens 13 Gewichtsprozent Chrom bezogen auf die Gesamtmasse des Stahls aufweist.

Nach einer Weiterbildung der Erfindung beträgt die Dicke des flächigen Metalldekorelementes 0, 1 bis 0, 4 mm, bevorzugt 0, 1 bis 0, 2 mm. Falls das flächige Metalldekorelement aus Stahl oder Edelstahl hergestellt ist, beträgt die Dicke bevorzugt 0,1 bis 0,2 mm. Das Metalldekorelement ist bevorzugt eine Metallfolie.

Grundsätzlich kann für das Aufbringen der Schicht auf die Rückseite des flächigen Metalldekorelementes jedes Verfahren verwendet werden, welches ermöglicht, dass das die Schicht bildende Material unter genügend hohem Druck auf die Rückseite des flächigen Metalldekorelement aufgebracht werden kann, um das flächigen Metalldekorelementes erfindungsgemäss umzuformen. Die Verfahren welche hierzu verwendbar sind, beziehungsweise der Druck, welche diese Verfahren zu generieren fähig sein müssen, sind vor allem abhängig von der Dicke des flächigen Metalldekorelementes und der Härte des Metalls aus welchem das flächige Metalldekorelement hergestellt ist. Ein vergleichweise weiches Metall ist zum Beispiel Aluminium, und ein vergleichsweise hartes Metall ist zum Beispiel Edelstahl. Bevorzugt wird die Schicht mittels eines Spritzgussverfahrens oder eines Extrusionsverfahren, bevorzugt mittels des Spritzgussverfahrens, hergestellt. Bei der Anwendung des Spritzgussverfahrens beim erfindungsgemässen Verfahren zur Herstellung des Erzeugnisses umfasst das erfindungsgemässe Verfahren bevorzugt folgende Verfahrensschritte:

Verfahren zur Herstellung eines Erzeugnisses, das ein flächiges, plastisch umgeformtes Metalldekorelement mit einer Sichtseite und einer Rückseite und eine an die Rückseite angebrachte Schicht aufweist, wobei das flächige, plastisch umgeformte Metalldekorelement eine Vertiefung aufweist, welche zur Sichtseite hin offen ausgebildet ist, wobei in der Vertiefung ein Material angeordnet ist, gekennzeichnet durch folgende Verfahrensschritte:
- in ein flächiges Metalldekorelement wird die Vertiefung eingearbeitet,
- das Material wird als Eintrag in der Vertiefung angeordnet, wobei der Eintrag eine Oberseite mit einem obersten Bereich aufweist,
- nach dem Anordnen des Eintrages in der Vertiefung wird das flächige Metalldekorelement in eine Spritzgussform eingelegt,
- die Schicht wird an der Rückseite des eingelegten flächigen Metalldekorelementes durch Hinterspritzen angebracht, wobei durch das Anbringen der Schicht die Sichtseite des flächigen Metalldekorelementes an die Innenseite des Spritzgussform angepresst und umgeformt wird, so dass der oberste Bereich der Oberseite des Eintrages im Wesentlichen in der Ebene des an die Vertiefung angrenzenden Randbereiches der Sichtseite des flächigen, plastisch umgeformten Metalldekorelementes liegt.
- das Produkt wird aus der Spritzgussform entformt.

Das aus der Spritzgussform entformte Produkt bildet bereits das Erzeugnis oder wird zum Erzeugnis mittels wenigstens einem weiteren Verfahrensschritt weiterverarbeitet.

Der Innendruck in der Spritzgussform beträgt vorzugweise 200 bis 900 bar (200 * 10⁵ Pa bis 900 * 10⁵ Pa). Das Spritzgussverfahren weist gegenüber anderen Verfahren folgende Vorteile auf:
- Das flächige Metalldekorelement kann einfach in der Spritzgussform sicher positioniert werden, so dass beim Aufbringen der Schicht, insbesondere beim Aufbringen der Schicht unter hohem Druck, das flächige Metalldekorelement beispielsweise nicht verrutscht. Entsprechend verrutschen auch die Vertiefungen nicht gegenüber der Eintrittöffnung oder Eintrittöffnungen durch welche das die Schicht bildende Material in den Hohlraum der Spritzgussform eintritt;
- Das erfindungsgemässe Verfahren unter Verwendung des Spritzgussverfahrens erlaubt eine rationelle Herstellung grosser Stückzahlen des Erzeugnisses;
- Das Spritzgussverfahren ermöglicht die Generierung von hohen Drücken beim Anbringen der Schicht. Somit sind die Freiheitsgrade bezüglich der Umformung besonders hoch;
- Weist das flächige Metalldekorelement mehrere Vertiefungen auf, so erlaubt das Spritzgussverfahren die spezifische Umformung von einzelnen oder mehreren spezifisch definierten Vertiefungen.

Dies ist möglich, weil beim Spritzgiessen die Angusssituation entsprechend der Bauteilgeometrie gewählt werden kann. Zudem kann beim Spritzgiessen eine spezifische Vertiefung gezielt umgeformt werden, weil in Abhängigkeit der Bauteilgeometrie und der gewählten Angussituation unterschiedliche Innendrücke im Hohlraum der Spritzgussform erzielt werden können, womit unterschiedliche Verformungsgrade des flächigen Metalldekorelementes beziehungsweise von spezifischen Vertiefungen im flächigen Metalldekorelement erreichbar sind.

Das erfindungsgemässe Verfahren unter Verwendung des Extrusionsverfahren erlaubt ebenfalls eine rationelle Herstellung grosser Stückzahlen des Erzeugnisses. Im Falle der Extrusion liegt das flächige Metalldekorelement als Band, vorzugsweise als bandförmige Folie, vor, welches durch eine Extrusionsvorrichtung hindurchtransportiert wird, wobei in der Extrusionsvorrichtung dann die Schicht auf die Rückseite des flächigen Metalldekorelementes aufgebracht wird. Hierzu wird das Band beispielsweise von einer Abrollvorrichtung abgerollt und danach in die Extrusionsvorrichtung eingeführt. Das abzurollende Band kann bereits die Vertiefungen einschliesslich der darin angeordneten Einträge aufweisen. Denkbar ist auch, dass vor der Extrusionsvorrichtung, insbesondere unmittelbar vor der Extrusionsvorrichtung, wenigstens eine Vertiefung hergestellt sowie die Anordnung eines Eintrages in wenigstens einer Vertiefung vorgenommen wird. Das Extrusionsverfahren ist ein kontinuierliches Verfahren. Falls das Verfahren zur Herstellung der Vertiefung und das Verfahren zum Anordnen des Eintrages in der Vertiefung als diskontinuierliche Verfahren ausgestaltet sind, durchläuft das Band bevorzugt zwischen der Vorrichtung zum Anordnen des Eintrages und der Extrusionsvorrichtung eine Pufferanordnung. Bevorzugt verläuft das Band im Bereich der Pufferanordnung schlaufenartig. Ebenfalls durchläuft das Band bevorzugt die genannte Pufferanordnung, falls das Verfahren zum Anordnen des Eintrages als diskontinuierliches Verfahren und das Verfahren zur Herstellung der Vertiefung als kontinuierliches Verfahren ausgestaltet sind. Zudem ist dann bevorzugt zwischen der Vorrichtung zum Anordnen des Eintrages und der Vorrichtung zur Herstellung der Vertiefung ebenfalls eine Pufferanordnung zwischengeschaltet. Diese verläuft bevorzugt schlaufenartig. Für den Fall, dass das Verfahren zum Anordnen des Eintrages als kontinuierliches Verfahren und das Verfahren zur Herstellung der Vertiefung als diskontinuierliches Verfahren ausgestaltet sind, so ist bevorzugt zwischen der Vorrichtung zum Anordnen des Eintrages und der Vorrichtung zur Herstellung der Vertiefung ein Pufferanordnung zwischengeschaltet. Bevorzugt verläuft das Band im Bereich der Pufferanordnung schlaufenartig. Die Vorrichtung zur kontinuierlichen Herstellung der Vertiefung kann beispielsweise eine Prägerolle oder zwei einander gegenüberliegende Prägerollen oder eine Laservorrichtung umfassen. Die Vorrichtung zum kontinuierlichen Anordnen des Eintrages umfasst beispielsweise einer Druckrolle oder einen gesteuerten Sprühkopf. Eine Vorrichtung zur diskontinuierlichen Herstellung der Vertiefung kann beispielsweise eine Presse oder eine Laservorrichtung sein. Eine Vorrichtung zum diskontinuierlichen Anordnen des Eintrages umfasst beispielsweise eine Druckvorrichtung. Um die Schicht auf die Rückseite des bandförmigen, flächigen Metalldekorelementes aufzutragen, wird das bandförmige, flächige Metalldekorelement durch eine Extrusionsvorrichtung hindurchtransportiert. Zum Auftragen der Schicht weist die Extrusionsvorrichtung wenigstens einen Extrusionskopf auf. Beim Auftragen der Schicht wird die Sichtseite des flächigen Metalldekorelementes und gegebenenfalls der oberste Bereich der Oberseite des Eintrages gegen eine dem Extrusionskopf gegenüberliegend angeordneten Oberfläche einer Wandung der Extrusionsvorrichtung angepresst und dadurch das flächige Metalldekorelement umgeformt, so dass der oberste Bereich der Oberseite des Eintrages im Wesentlichen in der Ebene des an die Vertiefung angrenzenden Randbereiches der Sichtseite des flächigen, plastisch umgeformten Metalldekorelementes zu liegen kommt. Der oberste Bereich der Oberseite eines Eintrages wird gegen eine dem Extrusionskopf gegenüberliegend angeordneten Oberfläche einer Wandung der Extrusionsvorrichtung angepresst, falls der oberste Bereich der Oberseite des Eintrages oberhalb der Ebene des an die Vertiefung angrenzenden Randbereiches der Sichtseite des flächigen Metalldekorelementes liegt. Um durch das Auftragen der Schicht einen genügenden Umformdruck zu erzeugen, kann die Transportgeschwindigkeit, mittels welcher das bandförmige, flächige Metalldekorelement durch die Extrusionsvorrichtung hindurchtransportiert wird, entsprechend gewählt werden. Ist ein hoher Druck notwendig, so kann eine tiefe Transportgeschwindigkeit gewählt werden. Es kann auch die Dicke des bandförmigen, flächigen Metalldekorelementes sowie die Härte des Metalls aus welchem das bandförmige, flächige Metalldekorelement hergestellt ist, an den Druck angepasst werden, welches das Extrusionsverfahren zu generieren fähig ist. Um die mechanische Belastung der Sichtseite des flächigen Metalldekorelementes und gegebenenfalls des obersten Bereiches der Oberseite des Eintrages, welche an der Oberfläche der Wandung vorbeigeführt wird oder werden, zu reduzieren, wird vorzugsweise auf die Oberfläche der Wandung, zur Reduktion der Reibung zwischen der Oberfläche der Wandung sowie der Sichtseite des flächigen Metalldekorelementes und gegebenenfalls des obersten Bereiches der Oberseite des Eintrages, kontinuierlich ein Schmiermittel auf die Oberfläche der Wandung aufgetragen.

Alternativ zur beschriebenen Extrusionsvorrichtung ist auch folgende Extrusionsvorrichtung möglich: Diese Extrusionsvorrichtung weist einen ersten, vorzugweise unteren, Extrusionskopf zum Aufbringen wenigstens einer Schicht auf die Rückseite des flächigen Metalldekorelementes, und einen zweiten, vorzugweise oberen, Extrusionskopf zum Auftragen wenigstens einer Schutzschicht auf die Sichtseite des flächigen Metalldekorelementes sowie der Oberseite wenigstens eines Eintrages auf. Der zweite Extrusionskopf ist vorzugweise vor dem ersten Extrusionskopf angeordnet, so dass beim Hindurchführen des Metallbandes durch die Extrusionsvorrichtung die Schutzschicht aufgetragen wird, bevor der Auftrag der Schicht stattfindet. Bevorzugt wird die Schutzschicht an der Eintrittsöffnung aufgetragen durch welche das bandförmige Metalldekorelement in die Extrusionsvorrichtung eingeführt wird. Dies bietet den Vorteil, dass die mechanische Belastung oder Reibung zwischen der Sichtseite des bandförmigen, flächigen Metalldekorelementes sowie gegebenenfalls des Eintrages dessen oberster Bereich der Oberseite oberhalb der Ebene des an die Vertiefung angrenzenden Randbereiches der Sichtseite des flächigen Metalldekorelementes angeordnet ist, und der Wandung der Extrusionsvorrichtung reduziert werden kann. Das aus der Extrusionsvorrichtung austretende Produkt bildet bereits das erfindungsgemässe Erzeugnis oder wird zum erfindungsgemässen Erzeugnis weiterverarbeitet. Vorzugsweise wird das aus der Extrusionsvorrichtung austretende Produkt zugeschnitten oder bevorzugt weiterverarbeitet und danach zugeschnitten.

Nach einer Weiterbildung der Erfindung wird die Schicht aus Kunststoff hergestellt. Der Kunststoff umfasst ein thermoplastisches Kunststoffmaterial oder eine duroplastisches Kunststoffmaterial. Bevorzugt umfasst der Kunststoff ein thermoplastisches Kunststoffmaterial wie beispielsweise Polyvinylchlorid (PVC), Acrylnitrilbutadienstyrol (ABS), Polyamid (PA) oder Polypropylen (PP), bevorzugt Acrylnitril-Butadien-Styrol-Copolymerisat / Polycarbonat (ABS / PC) oder Polyamid (PA). Der Kunststoff umfassend Acrylnitril-Butadien-Styrol-Copolymerisat / Polycarbonat (ABS / PC) kann beispielsweise noch 20 Gewichtsprozente an Glasfasern bezogen auf das Gesamtgewicht des Kunststoffes aufweisen. Ein Kunststoff umfassend Polyamid 6 kann beispielsweise noch 40 Gewichtsprozente an Glasfasern bezogen auf das Gesamtgewicht des Kunststoffes aufweisen. Je nach Anwendung des aus dem erfindungsgemässen Verfahren resultierenden Erzeugnis wird das thermoplastische oder das duroplastische Kunststoffmaterial ausgewählt, und gegebenenfalls mit Zusatzstoffen, wie beispielsweise Glasfasern, versehen.

Die Dicke der Schicht kann beliebig, je nach Anwendung des Erzeugnisses, gewählt werden. Beispielsweise beträgt die Dicke 0,5 mm bis 4 mm.

Nach einer Weiterbildung der Erfindung wird vor dem Anbringen der Schicht auf die Rückseite des flächigen Metalldekorelementes die Rückseite des flächigen Metalldekorelementes mit einem Haftvermittler versehen. In diesem Fall wird die Schicht an den an der Rückseite des flächigen Metalldekorelementes angebrachten Haftvermittler angebracht. Die Schicht ist dann mittels eines Haftvermittlers an der Rückseite des flächigen, plastisch umgeformten Metalldekorelementes befestigt.

Nach einer Weiterbildung der Erfindung wird auf der Sichtseite des flächigen, plastisch umgeformten Metalldekorelementes sowie der Oberseite des Eintrages wenigstens eine Schutzschicht angeordnet. Die Schutzschicht weist beispielsweise einen Lack oder einen Kunststoff auf. Bevorzugt weist die Schutzschicht einen Kunststoff auf, insbesondere einen transparenten Kunststoff. Vorzugweise ist die Schutzschicht ablösbar, bevorzugt von Hand ablösbar, an der Sichtseite des flächigen, plastisch umgeformten Metalldekorelementes sowie der Oberseite des Eintrages befestigt. Der Kunststoff weist bevorzugt einen thermoplastischen Kunststoff wie beispielsweise Polyvinylchlorid (PVC), Acrylnitrilbutadienstyrol (ABS), Polyamid (PA) oder Polypropylen (PP) auf.

Das erfindungsgemässe Verfahren führt zu einem Erzeugnis, das ein flächiges, plastisch umgeformtes Metalldekorelement mit einer Sichtseite und einer Rückseite und eine an die Rückseite angebrachte Schicht aufweist, wobei das flächige, plastisch umgeformte Metalldekorelement eine Vertiefung aufweist, welche zur Sichtseite hin offen ausgebildet ist, wobei in der Vertiefung ein Material angeordnet ist, dadurch gekennzeichnet, dass das in der Vertiefung angeordnete Material ein Eintrag ist, wobei der Eintrag eine Oberseite mit einem obersten Bereich aufweist, und wobei der oberste Bereich der Oberseite des Eintrages im Wesentlichen in der Ebene des an die Vertiefung angrenzenden Randbereiches der Sichtseite des flächigen, plastisch umgeformten Metalldekorelementes liegt. Da das Erzeugnis unter Verwendung eines erfindungsgemäss hergestellten Metalldekorelementes hergestellt wird, indem zuerst in das Metalldekorelement wenigstens eine Vertiefung eingearbeitet wird und danach in wenigstens eine Vertiefung wenigstens ein Eintrag angeordnet wird, ist eine grössere Flexibilität bei der Auswahl des Materials für die ästhetische Gestaltung der Sichtseite des Erzeugnisses, möglich. Durch das Anordnen des Eintrages in eine bereits vorhandene Vertiefung ist die Gefahr des Zerlaufens des Materials vergleichsweise vermindert. Es können nun Materialien, unabhängiger von deren Viskosität, als Eintragmaterial verwendet werden wie beispielsweise Flüssigkeiten wie zum Beispiel flüssige Lacke, Druckfarben, oder ein Pulver. Im Fall einer Flüssigkeit wird bevorzugt eine an Metall anhaftende Flüssigkeit verwendet. Flüssigkeiten, insbesondere an Metall anhaftende Flüssigkeiten, schmiegen sich vergleichsweise besser an die Oberfläche der Vertiefung an, so dass vergleichweise eine bessere Befestigung des Eintrages in der Vertiefung, insbesondere eine vergleichsweise bessere Haftung zwischen der Oberfläche des Eintrages und der Oberfläche der Vertiefung im Erzeugnis erzielbar ist. Dem Fachmann sind geeignete Flüssigkeiten oder Pulver bekannt. Im Erzeugnis sind somit vergleichsweise weniger Zwischenräume zwischen der Oberfläche des Eintrages und der Oberfläche der Vertiefung vorhanden. Dadurch ist auch die Adhäsionskraft zwischen der Oberfläche des Eintrages und der Oberfläche der Vertiefung vergleichsweise erhöht beziehungsweise der Eintrag ist vergleichsweise besser an der Oberfläche der Vertiefung befestigt.

Nach einer Weiterbildung der Erfindung ist die Vertiefung mittels eines Wärmeeintrages hergestellt. Nach einer Weiterbildung der Erfindung ist der Wärmeintrag mittels Laserstrahlung erfolgt.

Nach einer Weiterbildung der Erfindung weist das flächige, plastisch umgeformte Metalldekorelement wenigstens zwei Vertiefungen auf welche zur Sichtseite hin offen ausgebildet sind, wobei in sämtlichen Vertiefungen der Eintrag angeordnet ist.

Nach einer Weiterbildung der Erfindung liegt der oberste Bereich der Oberseite des Eintrages in der Ebene des an die Vertiefung angrenzenden Randbereiches der Sichtseite des flächigen, plastisch umgeformten Metalldekorelementes.

Nach einer Weiterbildung der Erfindung weist die Oberseite des Eintrages einen Randbereich auf, wobei der Randbereich im Wesentlichen bündig, bevorzugt bündig, mit dem an die Vertiefung angrenzenden Randbereich der Sichtseite des flächigen, plastisch umgeformten Metalldekorelementes abschliesst. Dies bietet den Vorteil, dass der Eintritt von Verschmutzungen in die Vertiefung reduziert ist. Enthält das flächige, plastisch umgeformte Metalldekorelement wenigstens zwei Einträge, schliesst bevorzugt der Randbereich sämtlicher Einträge im Wesentlichen bündig, bevorzugt bündig ab.

Nach einer Weiterbildung der Erfindung ist die Vertiefung eine Vertiefung mit Hinterschnitt. Beim erfindungsgemäss hergestellten Erzeugnis ist somit der in einer Vertiefung mit Hinterschnitt angeordnete Eintrag mechanisch, insbesondere formschlüssig, fixiert. Bevorzugt weist eine Vertiefung mit Hinterschnitt einen Querschnitt auf, dessen Breite mit Abstand zur Sichtseite zunimmt.

Nach einer Weiterbildung der Erfindung bildet im Wesentlichen die gesamte Oberseite des Eintrages den obersten Bereich.

Nach einer Weiterbildung der Erfindung bildet die gesamte Oberseite des Eintrages den obersten Bereich.

Nach einer Weiterbildung der Erfindung ist die Oberseite des Eintrages wenigstens teilweise plan, bevorzugt im Wesentlichen plan, bevorzugter plan. Nach einer Weiterbildung der Erfindung ist die Oberseite des Eintrages wenigstens teilweise nach aussen gewölbt, im Wesentlichen nach aussen gewölbt oder nach aussen gewölbt. Nach einer Weiterbildung der Erfindung ist die Oberseite des Eintrages wenigstens teilweise nach innen gewölbt, im Wesentlichen nach innen gewölbt oder nach innen gewölbt.

Nach einer Weiterbildung der Erfindung bildet der in der Vertiefung angeordnete Eintrag ein Symbol, wie beispielsweise ein Buchstabe. Der Eintrag weist eine Oberseite auf, wobei, bevorzugt in der Draufsicht auf das Erzeugnis, die Oberseite des Eintrages ein Symbol bildet.

Nach einer Weiterbildung der Erfindung ist der Eintrag aus einer oder mehreren Druckfarben hergestellt.

Nach einer Weiterbildung der Erfindung ist die Schicht eine Kunststoffschicht.

Nach einer Weiterbildung der Erfindung ist der Eintrag als Lichtleiter ausgebildet.

Nach einer Weiterbildung der Erfindung ist die Schicht ein Spritzgussteil oder eines Extrusionsteil, bevorzugt ein Spritzgussteil. Die Schicht ist an der Rückseite des flächigen, plastisch umgeformten Metalldekorelementes befestigt. Nach einer Weiterbildung der Erfindung ist die Schicht mittels eines an der Rückseite des flächigen, plastisch umgeformten Metalldekorelementes angeordneten Haftvermittlers an der Rückseite des flächigen, plastisch umgeformten Metalldekorelementes befestigt.

Nach einer Weiterbildung der Erfindung ist das flächige, plastisch umgeformte Metalldekorelement aus Aluminium, bevorzugt aus Stahl, bevorzugter aus Edelstahl, noch bevorzugter aus Edelstahl mit austenitischem Gefüge, hergestellt. Nach einer Weiterbildung der Erfindung ist das flächige, plastisch umgeformte Metalldekorelement eine Metallfolie.

Nach einer Weiterbildung der Erfindung weist das flächige, plastisch umgeformte Metalldekorelement im Bereich des Eintrages eine verminderte Dicke auf.

Nach einer Weiterbildung der Erfindung ist das Erzeugnis ein Bauteil. Das Bauteil ist beispielsweise ein Element für ein Kraftfahrzeug, beispielsweise eine Zierleiste, bevorzugt eine Einstiegsleiste, eine Mittelkonsole oder auch eine Anzeige für den Innenraum des Kraftfahrzeuges. Denkbar ist auch eine Ausbildung des Erzeugnisses als Schalter oder als Schaltertaste. Denkbar ist auch, dass das Bauteil ein Element, wie beispielsweise eine Zierleiste für beispielsweise ein Haushaltsgerät wie zum Beispiel für einen Kühlschrank, Dampfgarer, Waschmaschine, Backofen, Kochherd, Geschirrspülmaschine oder Möbel oder dergleichen ist.

Weitere vorteilhafte Merkmale der Erfindung ergeben sich aus der nachfolgenden Beschreibung sowie den Zeichnungen. Ausführungsbeispiele der Erfindung werden nachfolgend anhand von Zeichnungen erläutert. Es zeigen:
Fig.1 schematisch einen Schnitt durch einen Teil eines Erzeugnisses,
Fig.2 schematisch eine Draufsicht auf die Sichtseite des Erzeugnisses gemäss Fig.1,
Fig.3 schematisch eine Variante des Schnittes gemäss Figur 1,
Fig.4 bis 11 schematisch einzelne Schritte des erfindungsgemässen Verfahrens zur Herstellung des in Fig.1 dargestellten Erzeugnisses,
Fig.12 bis Fig.15 schematisch einzelne Schritte einer Variante des erfindungsgemässen Verfahrens und
Fig.16 schematisch einen Schnitt durch eine Variante des Erzeugnisses.

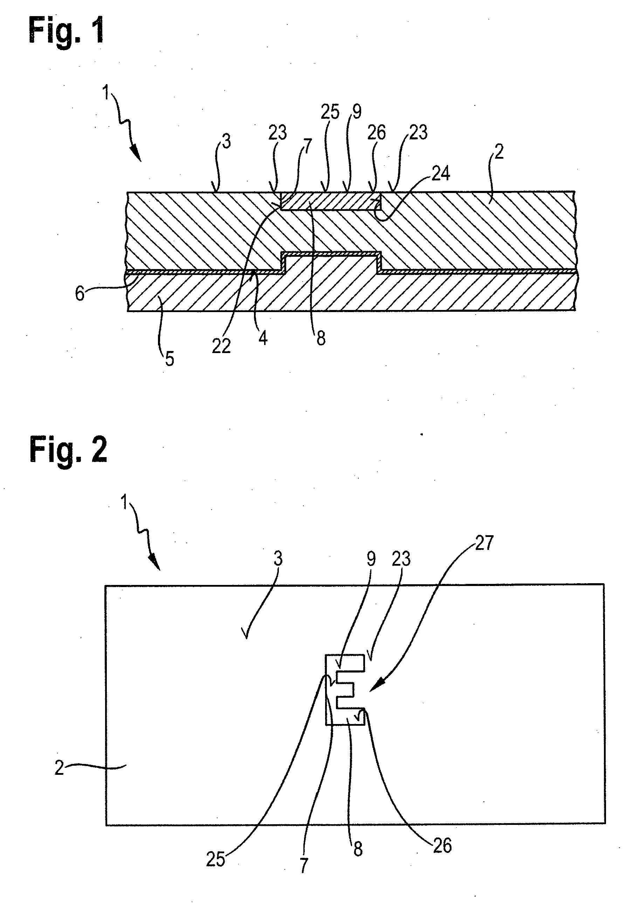

Die Figuren 1 und 2 zeigen eine Einstiegsleiste 1 als Erzeugnis, welche einen flächiges, plastisch umgeformtes Metalldekorelement 2 mit einer Sichtseite 3 und einer Rückseite 4 sowie eine an der Rückseite 4 angebrachte Schicht 5 aufweist. Das flächige, plastisch umgeformte Metalldekorelement 2 ist vorzugsweise eine Metallfolie. Das flächige Metalldekorelement 2 kann aus einem beliebigen, plastisch verformbaren Metall hergestellt sein, ist aber bevorzugt aus Aluminium, bevorzugter aus Stahl, noch bevorzugter aus Edelstahl, noch weiter bevorzugter aus Edelstahl mit austenitischem Gefüge, hergestellt. Die Schicht 5 weist einen Kunststoff, bevorzugt einen thermoplastischen Kunststoff, auf. Der Kunststoff der Schicht 5 weist vorzugsweise Zusatzstoffe auf, wie beispielsweise Glasfasern, welche die Festigkeit der Schicht 5 erhöhen. Zur besseren Befestigung der Schicht 5 an der Rückseite 4 des flächigen, plastisch umgeformten Metalldekorelementes 2 ist die Schicht 5 vorzugsweise, wie in Figur 1 ersichtlich, über einen Haftvermittler 6 an der Rückseite 4 befestigt. Haftvermittler, mittels welchen eine Kunststoffoberfläche, insbesondere eine Oberfläche eines thermoplastischen Kunststoffes, und eine Metalloberfläche wie beispielsweise einer Aluminiumoberfläche, Stahloberfläche oder Edelstahloberfläche verbunden werden können, sind dem Fachmann bekannt. Die Schicht 5 ist mittels des Spritzgussverfahrens an den Haftvermittler 6 angespritzt und bildet somit ein Spritzgussteil. Grundsätzlich kann die Schicht 5 eine einzige Schicht oder aber auch mehrerer Schichten aufweisen. Anstatt des Spritzgussverfahrens kann die Schicht 5 auch mit anderen Verfahren aufgetragen werden, wie zum Beispiel dem Extrusionsverfahren. Grundsätzlich sind beliebige Kunststoffauftragverfahren denkbar, welche ermöglichen, den Kunststoff unter genügend hohem Druck auf die Rückseite 4 des flächigen Metalldekorelementes 2 aufzutragen, um das flächige Metalldekorelement 2 plastisch umzuformen. Der aufzubringende Druck ist vor allem abhängig von der Dicke des Metalldekorelementes 2 sowie der Härte des Materials, aus welchem das Metalldekorelement 2 hergestellt ist. Das flächige, plastisch umgeformte Metalldekorelement 2 weist eine Vertiefung 7 mit einer Oberfläche 24 auf, welche zur Sichtseite 3 hin offen ausgebildet ist. Die Vertiefung 7 ist von der Sichtseite 3 her in das flächige Metalldekorelement 2 eingearbeitet. In der Vertiefung 7 ist ein Eintrag 8 angeordnet, welcher eine Oberseite 9 aufweist sowie eine Oberfläche 22, welche an die Oberfläche 24 der Vertiefung 7 angrenzt. Wie in Figur 1 ersichtlich, weist das flächige, plastisch umgeformte Metalldekorelement 2 im Bereich des Eintrages 8 eine verminderte Dicke auf. Gemäss Figur 2 ist auf der Sichtseite 3 des flächigen, plastisch umgeformten Metalldekorelementes 2 der Einstiegsleiste 1 ein Symbol 27 in Form des Buchstabens E sichtbar. Das Symbol 27 wird durch die Oberseite 9 des Eintrages 8 gebildet. Grundsätzlich kann das flächige, plastisch umgeformte Metalldekorelement 2 auch mehrere Vertiefungen und darin angeordnete Einträge und somit mehrere Symbole, wie beispielsweise identische oder unterschiedliche Buchstaben, aufweisen (nicht dargestellt). Selbstverständlich ist es auch denkbar, dass bei mehreren Vertiefungen nicht in allen Vertiefungen ein Eintrag angeordnet ist. Anhand von Figur 1 ist ersichtlich, dass der Eintrag 8 einen obersten Bereich 25 aufweist, welcher durch die gesamte Oberseite 9 des Eintrages 8 gebildet wird. Die Oberseite 9 ist plan ausgebildet. Zusätzlich ist Figur 1 entnehmbar, dass der oberste Bereich 25 in der Ebene des an die Vertiefung 7 angrenzenden Randbereiches 23 der Sichtseite 3 des flächigen, plastisch umgeformten Metalldekorelementes 2 liegt. Zudem grenzt der Randbereich 26 der Oberseite 9 des Eintrages 8 an den Randbereich 23 der Sichtseite 3, so dass der Randbereich 26 der Oberseite 9 des Eintrages 8 mit dem Randbereich 23 der Sichtseite 3 des flächigen, plastisch umgeformten Metalldekorelementes 2 bündig abschliesst. Der Eintrag 8 kann beispielsweise als Lichtleiter ausgebildet sein. Hierzu weist der Eintrag beispielsweise eine Stirnseite auf, über welche mittels eines Leuchtmittels Licht in den Lichtleiter eingekoppelt wird (nicht dargestellt). Das eingekoppelte Licht pflanzt sich im Lichtleiter fort und wird über die Oberseite 9 des Eintrages 8 wieder aus dem Eintrag 8 ausgekoppelt. Das Leuchtmittel ist beispielsweise eine Leuchtdiode, eine Elektrolumineszenzfolie oder eine OLED.

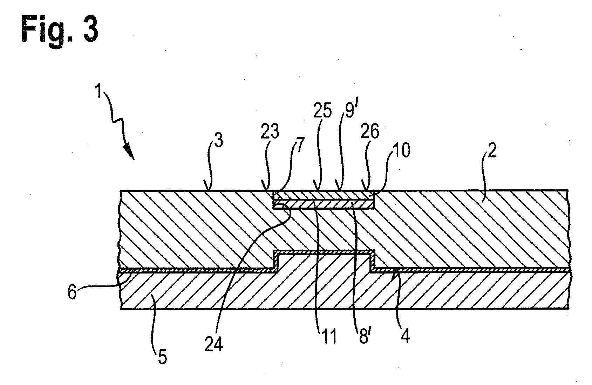

Figur 3 zeigt eine Variante des Schnittes gemäss Figur 1. Im Gegensatz zu Figur 1 wird der Eintrag 8' nicht nur durch eine einzige Schicht, sondern durch zwei Schichten 10 und 11 gebildet. Grundsätzlich kann ein Eintrag auch durch mehr als zwei Schichten gebildet sein. Wie in Figur 3 ersichtlich, weist das flächige, plastisch umgeformte Metalldekorelement 2 im Bereich des Eintrages 8' eine verminderte Dicke auf.

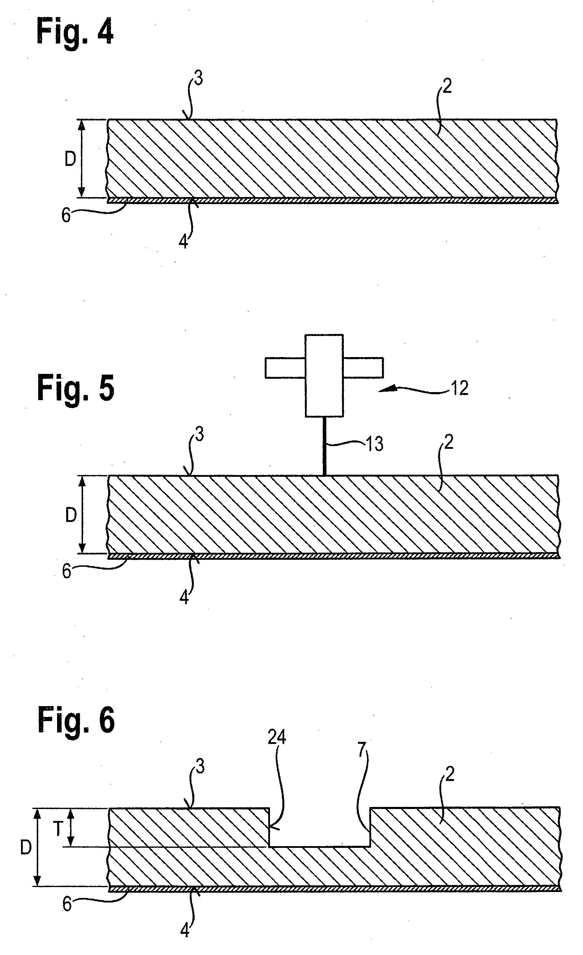

Anhand der Figuren 4 bis 11 wird die Herstellung der Einstiegsleiste 1 gemäss den Figuren 1 und 2 erläutert.

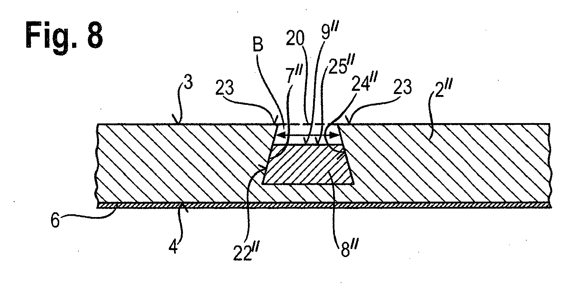

Zunächst wird ein flächiges Metalldekorelement 2 mit einer Sichtseite 3 und einer Rückseite 4 bereitgestellt. Die Dicke D des flächigen Metalldekorelementes 2 beträgt 0,1 bis 0,4 mm, bevorzugt 0, 1 bis 0,2 mm. Grundsätzlich kann ein Metalldekorelement beliebiger Dicke gewählt werden, solange dieses Metalldekorelement mit dem Kunststoffauftragverfahren, wie beispielsweise dem Spritzgussverfahren oder Extrusionsverfahren, plastisch verformbar ist. Das flächige Metalldekorelement 2 liegt vorzugsweise in der Form einer Metallfolie vor. Bevorzugt wird die Rückseite 4 mit einem Haftvermittler 6 versehen. Danach wird, wie in Figur 5 dargestellt, mittels einer Laservorrichtung 12 ein Laserstrahl 13 auf die Sichtseite 3 des flächigen Metalldekorelementes 2 gerichtet und von der Sichtseite 3 her die Vertiefung 7 hergestellt, indem mittels der Laserbestrahlung Material des flächige Metalldekorelementes 2 entfernt wird. Beispielsweise kann hierzu der gepulste Laser FP 300 der Firma Trotec mit einer Leistung von 10 Watt verwendet werden. Für die Herstellung der Vertiefung 7 kann jeder Lasertyp verwendet werden. Bevorzugt wird aber ein Laserfaser verwendet. Die Vertiefungen können auch mit anderen Verfahren, beispielsweise mittels mechanischer Vorrichtungen, wie zum Beispiel einer Presse, oder durch chemische Verfahren, wie zum Beispiel dem Ätzen, hergestellt werden. Bevorzugt wird die Vertiefung 7 mittels Laserstrahlung hergestellt. Wie in Figur 6 ersichtlich, wird durch die Laserbestrahlung eine Vertiefung 7 mit einem ersten Volumen hergestellt, welche zur Sichtseite 3 hin offen ausgebildet ist. Diese Vertiefung 7 ist im Querschnitt im Wesentlichen rechteckförmig und weist eine Oberfläche 24 auf. Es sind verschiedenste Vertiefungsquerschnitte denkbar, solange diese durch den Fachmann herstellbar sind. Die Vertiefung 7 weist eine Tiefe T auf, welche geringer als die Dicke D des flächigen Metalldekorelementes 2 ist. Anhand von Figur 8 wird beispielhaft eine solche alternative Vertiefung 7" in einem flächigen Metalldekorelement 2" gezeigt. Figur 8 zeigt eine mittels Laserbestrahlung hergestellte Vertiefung 7" mit einem Hinterschnitt, welche zur Sichtseite 3 hin offen ausgebildet ist. Diese Vertiefung 7" weist einen Querschnitt auf, dessen Breite B mit Abstand zur Sichtseite 3 zunimmt und im Wesentlichen trapezförmig ausgebildet ist. Bei einer mit einem solchen flächigen Metalldekorelement 2" erfindungsgemäss hergestellten Einstiegsleiste 1" (nicht dargestellt) ist somit ein in einer solchen Vertiefung 7" angeordneter Eintrag 8" mechanisch, insbesondere formschlüssig, als auch über eine erhöhte Adhäsionskraft, aufgrund der Herstellung der Vertiefung 7 mittels Laserstrahlung, fixiert. In Figur 8 ist ausserdem ersichtlich, dass der oberste Bereich 25" unterhalb der Ebene 20 des an die Vertiefung 7" angrenzenden Randbereiches 23 der Sichtseite 3 des flächigen Metalldekorelementes 2" liegt. Die Ebene 20 ist mit einer Strichlinie angedeutet.

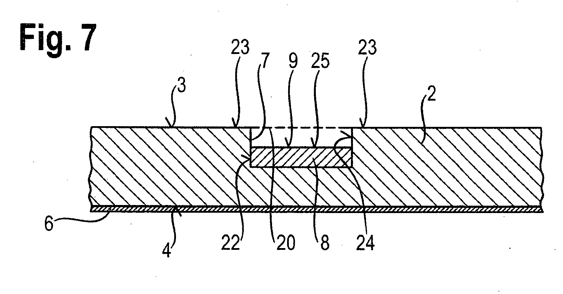

In die Vertiefung 7 gemäss Figur 6 wird dann ein flüssiger Eintrag 8, vorzugweise mittels eines Druckverfahrens, angeordnet, wie beispielsweise mittels Siebdruck (Figur 7). Es ist auch denkbar, dass der Eintrag 8 ein Feststoff wie zum Beispiel ein Metalleintrag, oder ein Pulver ist. Der Eintrag 8 ist bevorzugt eine Druckfarbe. Andere Verfahren, insbesondere andere Druckverfahren, zum Anordnen eines Eintrages, sowie zu diesen Verfahren kompatible Eintragsmaterialien, sind auch denkbar. Dem Fachmann sind viele solche Verfahren und Eintragsmaterialien bekannt. Durch die bereits beschriebene Herstellung der Vertiefung 7 mittels einer Laserbestrahlung wird eine Vertiefung 7 hergestellt, dessen Oberfläche 24 eine erhöhte Adhäsionskraft bezüglich einer die Oberfläche 24 berührende Oberfläche 22 eines Eintrages 8 aufweist (Figur 7). Dies ist insbesondere der Fall, wenn das flächige Metalldekorelement 2 aus Edelstahl und der Eintrag 8 aus Druckfarbe hergestellt ist. Da die Vertiefung 7 mittels Laserstrahlung hergestellt ist, weist die Metalloberfläche 24 eine Farbe auf, welche unterschiedlich ist zur Farbe der Metalloberfläche der Sichtseite 3 des Metalldekorelementes 2, welche nicht mit Laserstrahlung behandelt worden ist. Anhand von Figur 7 ist ersichtlich, dass der Eintrag 8 einen obersten Bereich 25 aufweist, welcher durch die gesamte Oberseite 9 des Eintrages 8 gebildet wird. Die Oberseite 9 ist plan ausgebildet. Zudem ist Figur 7 entnehmbar, dass der oberste Bereich 25 unterhalb der Ebene 20 des an die Vertiefung 7 angrenzenden Randbereiches 23 der Sichtseite 3 des flächigen Metalldekorelementes 2 liegt. Die Ebene 20 ist mit einer Strichlinie angedeutet. Wie noch beschrieben wird, kann der oberste Bereich 25 auch oberhalb der Ebene 20 des an die Vertiefung 7 angrenzenden Randbereiches 23 der Sichtseite 3 des flächigen Metalldekorelementes 2 liegen. Nach dem Eintragen einer Druckfarbe als Eintrag 8 in die Vertiefung 7 wird dann die Druckfarbe ausgehärtet. Diese Aushärtung erfolgt beispielsweise thermisch, mit UV-Strahlung, chemisch oder durch Ablüften. Die Aushärtung findet beispielsweise bei 70 bis 220°C, vorzugsweise bei mindestens etwa 80°C statt.

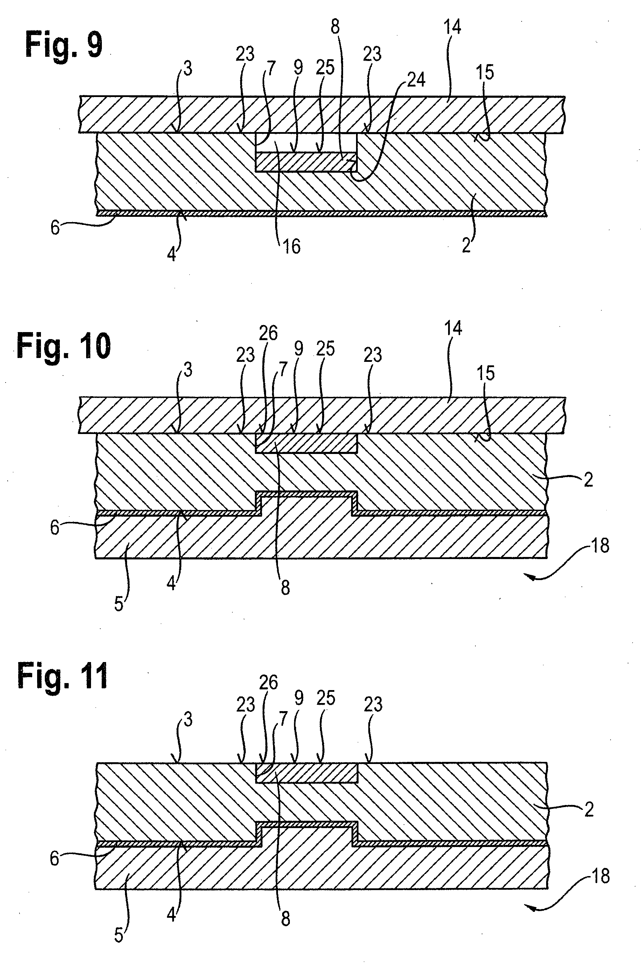

Nach dem Aushärten wird das flächige Metalldekorelement 2 in eine Spritzgussform 14 eingelegt (Figur 9). Das Einlegen erfolgt beispielsweise mittels eines mit einem Greifer bestückten Roboters (nicht dargestellt). Die Spritzgussform 14 weist eine Innenseite 15 auf, die plan ist und an welche das flächige Metalldekorelement 2 mit seiner Sichtseite 3 angelegt wird. Die Innenseite 15 kann beispielsweise auch bombiert sein, ist aber vorzugsweise plan. Da der oberste Bereich 25 des Eintrages 8 unterhalb der Ebene 20 des an die Vertiefung 7 angrenzenden Randbereiches 23 der Sichtseite 3 liegt (Figuren 7, 9), entsteht ein Hohlraum 16, welcher durch die Innenseite 15, dem obersten Bereich 25 des Eintrages 8 sowie der Oberfläche 24 der Vertiefung 7 gebildet wird. Nach dem Schliessen der Spritzgussform 14 wird der an der Rückseite 4 angeordnete Haftvermittler 6 mit einem ein thermoplastisches Kunststoffmaterial umfassenden Kunststoff hinterspritzt und hierdurch die Schicht 5 gebildet (Figur 10). Der Innendruck in der Spritzgussform 14 beträgt vorzugweise 200 bis 900 bar (200 * 10⁵ Pa bis 900 * 10⁵ Pa). Das thermoplastische Kunststoffmaterial umfasst beispielsweise Acrylnitril-Butadien-Styrol-Copolymerisat / Polycarbonat (ABS / PC) oder Polyamid 6. Der Acrylnitril-Butadien-Styrol-Copolymerisat / Polycarbonat (ABS / PC) enthaltende Kunststoff kann beispielsweise noch 20 Gewichtsprozente an Glasfasern bezogen auf das Gesamtgewicht des Kunststoffes aufweisen. Der Polyamid 6 enthaltende Kunststoff kann beispielsweise noch 40 Gewichtsprozente an Glasfasern bezogen auf das Gesamtgewicht des Kunststoffes aufweisen. Durch das Hinterspritzen wird die Sichtseite 3 des flächigen Metalldekorelementes 2 an die Innenseite 15 angepresst. Zudem wird durch das beim Hinterspritzen unter Druck auf den an der Rückseite 4 angeordneten Haftvermittler 6 aufgebrachte Kunststoffmaterial das flächige Metalldekorelement 2 umgeformt und der Eintrag 8 in Richtung der Innenseite 15 in den Hohlraum 16 verschoben bis der oberste Bereich 25 des Eintrages 8 an die Innenseite 15 zu liegen kommt. Der oberste Bereich 25 wird durch die gesamte Oberseite 9 des Eintrages 8 gebildet (Figur 10). Durch den beschriebenen Umformvorgang wird das erste Volumen der Vertiefung 7 im flächigen Metalldekorelement 2 (Figur 9)reduziert. Nach der Umformung weist die Vertiefung 7 im flächigen, plastisch umgeformten Metalldekorelement 2 ein zweites Volumen auf (Figuren 10, 11), welches kleiner als das genannte erste Volumen ist.

Figur 10 zeigt das aus dem Hinterspritzvorgang resultierende Produkt 18 welches ein flächiges, plastisch umgeformtes Metalldekorelement 2 sowie eine über einen Haftvermittler 6 an der Rückseite 4 des flächigen, plastisch umgeformten Metalldekorelementes 2 befestigte Kunststoffschicht 5 aufweist. Wie in Figur 10 und in Figur 11 ersichtlich, liegt der oberste Bereich 25 des Eintrages 8, welcher durch die gesamte Oberseite 9 des Eintrages 8 gebildet wird, in der Ebene des an die Vertiefung 7 angrenzenden Randbereiches 23 der Sichtseite 3 des flächigen, plastisch umgeformten Metalldekorelementes 2. Zudem grenzt der Randbereich 26 der Oberseite 9 des Eintrages 8 an den Randbereich 23 der Sichtseite 3, so dass der Randbereich 26 der Oberseite 9 des Eintrages 8 mit dem Randbereich 23 der Sichtseite 3 des flächigen, plastisch umgeformten Metalldekorelementes 2 bündig abschliesst. Zudem ist in den Figuren 10 und 11 ersichtlich, dass das flächige, plastisch umgeformte Metalldekorelement 2 im Bereich des Eintrages 8 eine verminderte Dicke aufweist.

Das Produkt 18 gemäss Figur 10 wird nun aus der Spritzgussform 14 entformt. Das entformte und in Figur 11 dargestellte Produkt 18 entspricht dem Erzeugnis beziehungsweise der Einstiegsleiste 1 oder das Produkt 18 wird noch zum Erzeugnis beziehungsweise der Einstiegsleiste 1 weiterverarbeitet. Bei einer allfälligen Weiterverarbeitung umfassend wenigstens einen weiteren Verfahrensschritt, wird beispielsweise eine Schutzschicht, auf die Sichtseite 3 sowie die Oberseite 9 des Produktes 18 aufgetragen (nicht dargestellt).

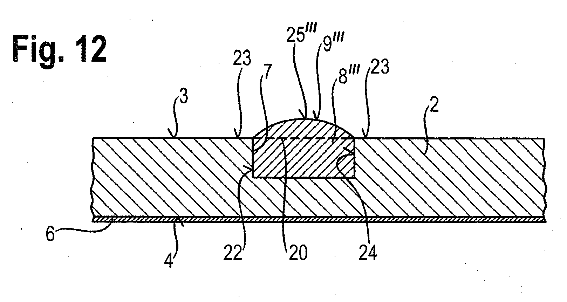

Die Figuren 12 bis 15 zeigen einzelne Schritte einer Variante des erfindungsgemässen Verfahrens. Die Figuren 12 bis 15 entsprechen grundsätzlich den Figuren 7, 9 bis 11. Unterschiedlich sind primär die Figur 12 und die Figur 7.

Die Figur 7 zeigt einen Eintrag 8 im flächigen Metalldekorelement 2 der einen obersten Bereich 25 aufweist, welcher durch die gesamte Oberseite 9 des Eintrages 8 gebildet wird, wobei der oberste Bereich 25 plan ist und unterhalb der Ebene 20 des an die Vertiefung 7 angrenzenden Randbereiches 23 der Sichtseite 3 des flächigen Metalldekorelementes 2 liegt. Dagegen weist gemäss Figur 12 der Eintrag 8"' im flächigen Metalldekorelement 2 eine nach aussen gewölbten Oberseite 9"' auf, welche an ihrem Scheitel einen obersten Bereich 25"' bildet, der oberhalb der Ebene 20 des an die Vertiefung 7 angrenzenden Randbereiches 23 der Sichtseite 3 des flächigen Metalldekorelementes 2 liegt. Aufgrund dieses Unterschiedes resultieren Unterschiede zwischen den Figuren 9 bis 11 und den Figuren 13 bis 15. Im Folgenden werden daher die Figuren 12 bis 15 hinsichtlich des Eintrages 8"' und der daraus resultierenden Unterschiede besprochen.

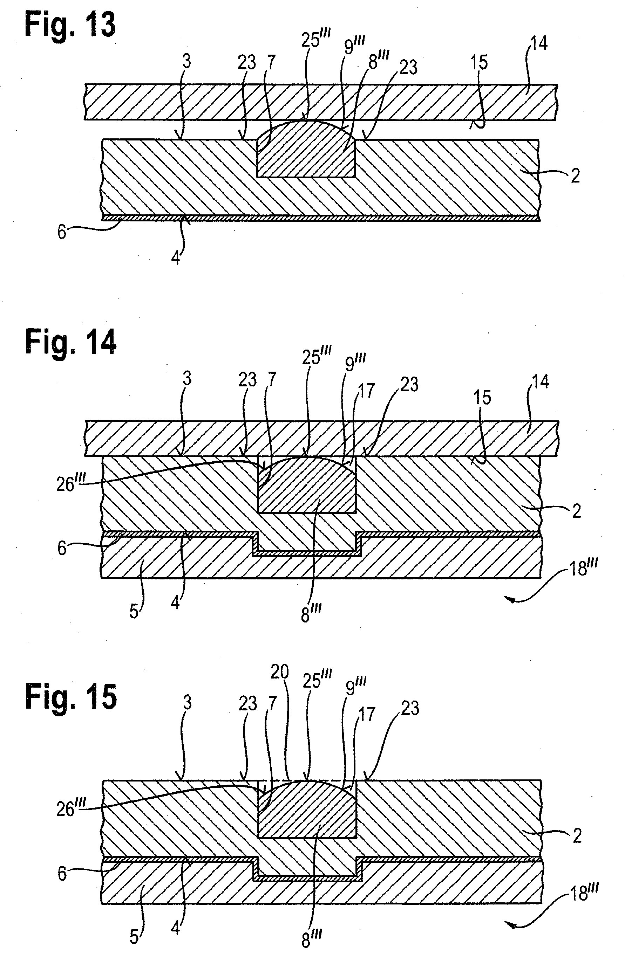

Gemäss Figur 12 ist in der ein erstes Volumen aufweisenden Vertiefung 7 des flächigen Metalldekorelementes 2 ein Eintrag 8"' angeordnet. Der Eintrag 8"' im flächigen Metalldekorelement 2 weist eine nach aussen gewölbte Oberseite 9"' auf, welche an ihrem Scheitel einen obersten Bereich 25"' bildet, der oberhalb der Ebene 20 des an die Vertiefung 7 angrenzenden Randbereiches 23 der Sichtseite 3 des flächigen Metalldekorelementes 2 liegt. Die Ebene 20 ist in Figur 12 mit einer Strichlinie angedeutet. Das flächige Metalldekorelement 2 wird gemäss Figur 13 wiederum mit seiner Sichtseite 3 in die Spritzgussform 14 eingelegt. Da der oberste Bereich 25"' oberhalb der Ebene 20 des an die Vertiefung 7 angrenzenden Randbereiches 23 der Sichtseite 3 des flächigen Metalldekorelementes 2 liegt, liegt der oberste Bereich 25"' des Eintrages 8"' an der Innenseite 15 der Spritzgussform 14 an. Nach dem Schliessen der Spritzgussform 14 wird der an der Rückseite 4 angeordnete Haftvermittler 6 mit Kunststoff hinterspritzt, so dass die Schicht 5 gebildet wird. Durch das Hinterspritzen wird der oberste Bereich 25"' des Eintrages 8"' an die Innenseite 15 angepresst und zudem das flächige Metalldekorelement 2 in Richtung der Innenseite 15 gedrückt. Hierdurch wird das flächige Metalldekorelement 2 umgeformt und im Rahmen dieses Umformvorganges der Eintrag 8"' in das flächige Metalldekorelement 2 eingeprägt. Die Figuren 14 und 15 zeigen das aus dem Hinterspritzvorgang resultierende Produkt 18"' welches ein flächiges, plastisch umgeformtes Metalldekorelement 2 sowie eine über den Haftvermittler 6 an der Rückseite 4 des flächigen, plastisch umgeformten Metalldekorelementes 2 befestigte Kunststoffschicht 5 aufweist. Der oberste Bereich 25"' der Oberseite 9"' des Eintrages 8"' gemäss den Figuren 14 und 15 liegt nun nach dem Umformvorgang in der Ebene 20 des an die Vertiefung 7 angrenzenden Randbereiches 23 der Sichtseite 3 des flächigen, plastisch umgeformten Metalldekorelementes 2. Die Ebene 20 ist in Figur 15 mit einer Strichlinie angedeutet. Wie in den Figuren 14 und 15 ersichtlich ist, füllt der Eintrag 8"' die Vertiefung 7 nicht vollständig aus, so dass an der Sichtseite 3 ein Spalt 17 zwischen dem Eintrag 8"' und dem flächigen, plastisch umgeformten Metalldekorelement 2 vorhanden ist. Das zweite Volumen der Vertiefung 7 im flächigen, plastisch umgeformten Metalldekorelementes 2 (Figur 15) ist grösser als das erste Volumen der Vertiefung 7 im flächigen Metalldekorelement 2 (Figur 13). Der Randbereich 26"' der Oberseite 9"' des Eintrages 8"' liegt zudem etwas unterhalb dem Randbereich 23 der Sichtseite 3, so dass der Randbereich 26"' der Oberseite 9"' des Eintrages 8"' mit dem Randbereich 23 der Sichtseite 3 des flächigen, plastisch umgeformten Metalldekorelementes 2 im Wesentlichen bündig abschliesst. In den Figuren 14 und 15 ist zudem ersichtlich, dass das flächige plastisch umgeformte Metalldekorelement 2 im Bereich des Eintrages 8"' eine verminderte Dicke aufweist.

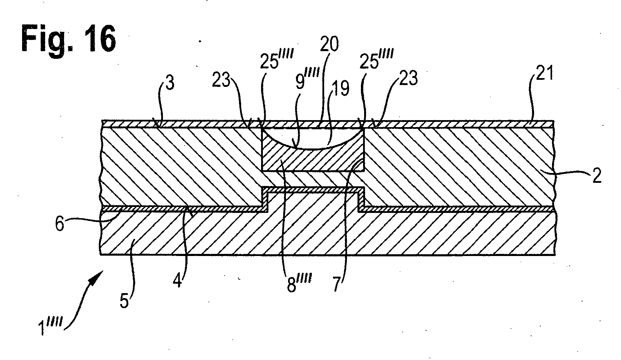

Figur 16 zeigt einen Schnitt durch eine Variante des Erzeugnisses. Das Erzeugnis in Form einer Einstiegsleiste 1"" weist einen in einer Vertiefung 7 angeordneten Eintrag 8"" auf. Wie in Figur 16 ersichtlich, liegt der oberste Bereich 25"" der Oberseite 9"" des Eintrages 8"" in der Ebene 20 des Randbereiches 23 der Sichtseite 3. Der oberste Bereich 25"" bildet den Randbereich der Oberseite 9"" des Eintrages 8"". Dieser Randbereich grenzt gemäss Figur 16 an den Randbereich 23 und schliesst somit bündig mit dem Randbereich 23 der Sichtseite 3 des flächigen, plastisch umgeformten Metalldekorelementes 2 des erfindungemässen Erzeugnisses beziehungsweise der Einstiegsleiste 1"" ab. Wie ersichtlich, ist die Oberseite 9"" des Eintrages 8"" nach innen gewölbt und bildet eine Vertiefung 19. In Figur 16 ist zudem ersichtlich, dass das flächige, plastisch umgeformte Metalldekorelement 2 im Bereich des Eintrages 8"" eine verminderte Dicke aufweist. Das Erzeugnis beziehungsweise der Einstiegsleiste 1"" gemäss Figur 16 weist zudem eine Schutzschicht 21 in der Form einer Kunststofffolie auf, welche auf der Sichtseite 3 des flächigen, plastisch umgeformten Metalldekorelementes 2 sowie dem obersten Bereich 25"" angeordnet ist. Die Schutzschicht 21 ist ablösbar, bevorzugt von Hand ablösbar, auf der Sichtseite 3 des flächigen, plastisch umgeformten Metalldekorelementes 2 sowie dem obersten Bereich 25"" befestigt und vorzugsweise transparent. Eine nicht ablösbare Schutzschicht 21 ist auch denkbar. Die Schutzschicht 21 ist bevorzugt aus einem thermoplastischen Kunststoff wie beispielsweise Polyvinylchlorid (PVC), Acrylnitrilbutadienstyrol (ABS), Polyamid (PA) oder Polypropylen (PP) hergestellt.

### Bezugszeichenliste

- 1: Einstiegsleiste
- 2: Metalldekorelement
- 3: Sichtseite
- 4: Rückseite
- 5: Schicht
- 6: Haftvermittler
- 7: Vertiefung
- 8: Eintrag
- 9: Oberseite
- 10: Schicht
- 11: Schicht
- 12: Laservorrichtung
- 13: Laserstrahl
- 14: Spritzgussform
- 15: Innenseite
- 16: Hohlraum
- 17: Spalt
- 18: Produkt
- 19: Vertiefung
- 20: Ebene
- 21: Schutzschicht
- 22: Oberfläche
- 23: Randbereich
- 24: Oberfläche
- 25: oberster Bereich
- 26: Randbereich
- 27: Symbol
- D: Dicke
- B: Breite
- T: Tiefe

## Patentansprüche

1. Verfahren zur Herstellung eines Erzeugnisses (1), das ein flächiges, plastisch umgeformtes Metalldekorelement (2) mit einer Sichtseite (3) und einer Rückseite (4) und eine an die Rückseite (4) angebrachte Schicht (5) aufweist, wobei das flächige, plastisch umgeformte Metalldekorelement (2) eine Vertiefung (7) aufweist, welche zur Sichtseite (3) hin offen ausgebildet ist, wobei in der Vertiefung (7) ein Material angeordnet ist, **gekennzeichnet durch** folgende Verfahrensschritte:
- in das flächige Metalldekorelement (2) wird die Vertiefung (7) eingearbeitet,
- das Material wird als Eintrag (8) in der Vertiefung (7) angeordnet, wobei der Eintrag (8) eine Oberseite (9) mit einem obersten Bereich (25) aufweist,
- die Schicht (5) wird an der Rückseite (4) des flächigen Metalldekorelementes (2) angebracht, wobei **durch** das Anbringen der Schicht (5) das flächige Metalldekorelement (2) umgeformt wird, so dass der oberste Bereich (25) der Oberseite (9) des Eintrages (8) im Wesentlichen in der Ebene (20) des an die Vertiefung (7) angrenzenden Randbereiches (23) der Sichtseite (3) des flächigen, plastisch umgeformten Metalldekorelementes (2) liegt.

2. Verfahren nach Anspruch 1, **dadurch gekennzeichnet, dass** die Vertiefung (7) eingearbeitet wird, indem durch Wärmeeintrag auf der Sichtseite (3) des flächigen Metalldekorelementes (2) Material des flächigen Metalldekorelementes (2) entfernt wird.

3. Verfahren nach Anspruch 2, **dadurch gekennzeichnet, dass** der Wärmeeintrag mittels Laserstrahlung (13) erfolgt.

4. Verfahren nach einem der vorangehenden Ansprüche, **dadurch gekennzeichnet, dass** der Eintrag (8) mittels Aufdrucken in der Vertiefung (7) des flächigen Metalldekorelementes (2) angeordnet wird.

5. Verfahren nach einem der vorangehenden Ansprüche, **dadurch gekennzeichnet, dass** der Eintrag (8) aus einer oder mehreren Druckfarben hergestellt ist.

6. Verfahren nach einem der vorangehenden Ansprüche, **dadurch gekennzeichnet, dass** die Dicke (D) des flächigen Metalldekorelementes (2) 0,1 bis 0,4 mm, bevorzugt 0,1 bis 0,2 mm, beträgt.

7. Verfahren nach einem der vorangehenden Ansprüche, **dadurch gekennzeichnet, dass** die Tiefe (T) der Vertiefung (7) geringer als die Dicke (D) des flächigen Metalldekorelementes (2) ist.

8. Verfahren nach einem der vorangehenden Ansprüche, **dadurch gekennzeichnet, dass** die Schicht (5) mittels eines Spritzgussverfahren oder eines Extrusionsverfahren, bevorzugt mittels des Spritzgussverfahren, hergestellt wird.

9. Verfahren nach einem der vorangehenden Ansprüche, **dadurch gekennzeichnet, dass** die Schicht (5) aus Kunststoff hergestellt wird.

10. Verfahren nach einem der vorangehenden Ansprüche, **dadurch gekennzeichnet, dass** das flächige Metalldekorelement (2) aus Stahl, bevorzugt Edelstahl, bevorzugter aus Edelstahl mit austenitischem Gefüge, hergestellt ist.

## Claims

1. A method for producing a product (1), which has a two-dimensionally extending, plastically shaped metal decorative component (2) with a visible side (3) and a rear side (4) and a layer (5) applied to the rear side (4), wherein the two-dimensionally extending, plastically shaped metal decorative component (2) has a depression (7), which is constructed to be open towards the visible side (3), wherein a material is arranged in the depression (7), **characterised by** the following method steps:
- the depression (7) is worked into the two-dimensionally extending metal decorative component (2),
- the material is arranged as an insertion (8) in the depression (7), wherein the insertion (8) has an upper side (9) with an uppermost region (25),
- the layer (5) is applied on the rear side (4) of the two-dimensionally extending metal decorative component (2), wherein the two-dimensionally extending metal decorative component (2) is shaped by means of the application of the layer (5), so that the uppermost region (25) of the upper side (9) of the insertion (8) is essentially located in the plane (20) of the edge region (23) of the visible side (3) of the two-dimensionally extending, plastically shaped metal decorative component (2), which adjoins the depression (7).

2. The method according to Claim 1, **characterised in that** the depression (7) is worked in, **in that** material of the two-dimensionally extending metal decorative component (2) is removed by the introduction of heat on the visible side (3) of the two-dimensionally extending metal decorative component (2).

3. The method according to Claim 2, **characterised in that** the introduction of heat takes place by means of laser radiation (13).

4. The method according to one of the preceding claims, **characterised in that** the insert (8) is arranged in the depression (7) of the two-dimensionally extending metal decorative component (2) by means of printing.

5. The method according to one of the preceding claims, **characterised in that** the insert (8) is produced from one or a plurality of printing inks.

6. The method according to one of the preceding claims, **characterised in that** the thickness (D) of the two-dimensionally extending metal decorative component (2) is 0.1 to 0.4 mm, preferably 0.1 to 0.2 mm.

7. The method according to one of the preceding claims, **characterised in that** the depth (T) of the depression (7) is smaller than the thickness (D) of the two-dimensionally extending metal decorative component (2).

8. The method according to one of the preceding claims, **characterised in that** the layer (5) is produced by means of an injection moulding method or an extrusion method, preferably by means of the injection moulding method.

9. The method according to one of the preceding claims, **characterised in that** the layer (5) is produced from plastic.

10. The method according to one of the preceding claims, **characterised in that** the two-dimensionally extending metal decorative component (2) is produced from steel, preferably high-grade steel, more preferably from high-grade steel with austenitic structure.

## Revendications

1. Procédé de fabrication d'un produit (1), qui présente un élément décoratif métallique (2) s'étendant en deux dimensions, façonné plastiquement comportant un côté visuel (3) et un côté arrière (4) et une couche (5) appliquée sur le côté arrière (4), dans lequel l'élément décoratif métallique (2) s'étendant en deux dimensions, façonné plastiquement présente un évidement (7), qui est conçu en étant ouvert dans la direction du côté visuel (3), dans lequel un matériau est disposé dans l'évidement (7), **caractérisé par** les étapes de procédé suivantes :
- l'évidement est usiné dans l'élément décoratif métallique (2) s'étendant en deux dimensions,
- le matériau est disposé comme une application (78) dans l'évidement (7), dans lequel l'application (8) présente un côté supérieur (9) avec une zone la plus haute (25),
- la couche (5) est appliquée sur le côté arrière (4) de l'élément décoratif métallique (2) s'étendant en deux dimensions, dans lequel l'élément décoratif métallique (2) est façonné au moyen de l'application de la couche (5), de telle sorte que la zone la plus haute (25) du côté supérieur (9) de l'application (8) se situe essentiellement dans le plan (20) de la zone de bord (23) contiguë à l'évidement (7), du côté visuel (3) de l'élément décoratif métallique (2) s'étendant en deux dimensions, façonné plastiquement.

2. Procédé selon la revendication 1, **caractérisé en ce que** l'évidement (7) est usiné, en éliminant par apport de chaleur sur le côté visible (3) de l'élément décoratif métallique (2) s'étendant en deux dimensions le matériau de l'élément décoratif métallique s'étendant en deux dimensions (2).

3. Procédé selon la revendication 2, **caractérisé en ce que** l'apport de chaleur s'effectue au moyen d'un rayonnement laser (13).

4. Procédé selon une des revendications précédentes, **caractérisé en ce que** l'application (8) est disposée au moyen d'une impression dans l'évidement (7) de l'élément décoratif métallique s'étendant en deux dimensions (2).

5. Procédé selon une des revendications précédentes, caractérisé en l'application (8) est produite à partir d'une ou plusieurs couleurs d'impression.

6. Procédé selon une des revendications précédentes, **caractérisé en ce que** l'épaisseur (D) de l'élément décoratif métallique s'étendant en deux dimensions (2) est comprise entre 0,1 et 0,4 mm, de préférence 0,1 et 0,2 mm.

7. Procédé selon une des revendications précédentes, **caractérisé en ce que** la profondeur (T) de l'évidement (7) est moindre que l'épaisseur (D) de l'élément décoratif métallique s'étendant en deux dimensions (2).

8. Procédé selon une des revendications précédentes, **caractérisé en ce que** la couche (5) est fabriquée au moyen d'un procédé de moulage par injection ou d'un procédé d'extrusion, de préférence au moyen du procédé de moulage par injection.

9. Procédé selon une des revendications précédentes, **caractérisé en ce que** la couche (5) est fabriquée en plastique.

10. Procédé selon une des revendications précédentes, **caractérisé en ce que** l'élément décoratif métallique (2) s'étendant en deux dimensions est fabriqué en acier, de préférence en acier inoxydable, de manière encore préférée en acier inoxydable avec structure austénitique.
